(19) **Europäisches Patentamt / European Patent Office / Office européen des brevets**

(11) **EP 3 089 857 B1**

(12) **FASCICULE DE BREVET EUROPEEN**

(45) Date de publication et mention de la délivrance du brevet:
**26.08.2020   Bulletin 2020/35**

(21) Numéro de dépôt: **14833522.7**

(22) Date de dépôt: **26.12.2014**

(51) Int Cl.:
**B29C 49/20** *(2006.01)*    **B29C 49/42** *(2006.01)*
**B29C 49/48** *(2006.01)*    **B29C 51/26** *(2006.01)*
**B29C 51/12** *(2006.01)*    **B29C 49/04** *(2006.01)*
**B29C 49/22** *(2006.01)*    **B29K 23/00** *(2006.01)*
**B29L 31/00** *(2006.01)*

(86) Numéro de dépôt international:
**PCT/FR2014/053559**

(87) Numéro de publication internationale:
**WO 2015/097421 (02.07.2015 Gazette 2015/26)**

(54) **PROCÉDÉ DE FORMATION D'UNE GOULOTTE DE SOUDURE SUR UNE PARAISON PENDANT LE SOUFFLAGE D'UN RÉSERVOIR**

VERFAHREN ZUR HERSTELLUNG EINER SCHWEISSTÜLLE AUF EINEM BLASROHLING WÄHREND DES EINBLASENS EINES TANKS

METHOD FOR FORMING A WELDING SPOUT ON A PARISON DURING THE BLOWING OF A TANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.12.2013   FR 1363620**

(43) Date de publication de la demande:
**09.11.2016   Bulletin 2016/45**

(73) Titulaire: **Plastic Omnium Advanced Innovation and Research**
**1130 Bruxelles (BE)**

(72) Inventeurs:
• **COING, Jean-François**
  **F-60280 Clairoix (FR)**
• **JOUIE, Sébastien**
  **F-60280 Margny Les Compiegne (FR)**
• **GUEZENNEC, Yvonnig**
  **F-60280 Venette (FR)**
• **COULON, Philippe**
  **F-60130 Saint Just en Chaussee (FR)**
• **GEORGE, André**
  **F-60420 Mery La Bataille (FR)**
• **FRANKO, Jozef**
  **90041 Rovinka (SK)**

(74) Mandataire: **Potdevin, Emmanuel Eric**
**LLR**
**11 boulevard de Sébastopol**
**75001 Paris (FR)**

(56) Documents cités:
**DE-A1- 10 214 900     US-A1- 2009 308 881**
**US-A1- 2011 221 104     US-B1- 6 338 420**
**US-B1- 7 600 652**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la fabrication de réservoirs en matière plastique, en particulier de réservoirs à carburant. Les documents DE10214900A1, US2011/221104A1, US2009/308881 A1, US6338420B1 et US7600652B1 sont représentatifs de l'arrière plan technologique.

Pour fabriquer des réservoirs en matière plastique, on utilise des paraisons multicouches, contenant notamment en leur intérieur une couche barrière, par exemple en EVOH. Une paraison est un extrudât en feuille ou en tube que l'on introduit dans un moule et à l'intérieur duquel on établit une surpression qui plaque ledit extrudât contre le moule pour le conformer à la forme souhaitée du réservoir.

Pour souder des pièces rapportées à des réservoirs en matière plastique, il est connu de prévoir des « goulottes de soudure », c'est-à-dire des formes en saillie qui présentent un bord, en général plan, apte à être chauffé pour se souder à un bord correspondant d'une pièce rapportée. La pièce rapportée peut être une tubulure, un raccord, un tuyau de ventilation, cette liste n'ayant aucun caractère limitatif.

La formation de la goulotte de soudure s'effectue pendant le soufflage de la paraison et nécessite un fluage important de la matière constituant la paraison, de manière que ladite matière remplisse une cavité spéciale délimitant la forme externe de la goulotte de soudure.

Dans certains cas, du fait de ce fluage, la couche barrière qui se trouve à l'intérieur de la paraison migre assez profondément dans la cavité et peut se retrouver assez proche de la zone de la goulotte de soudure servant à la soudure. Cette zone est en général définie sur une épaisseur de quelques mm, mesurée depuis le plan de soudure.

La présente invention vise à proposer un nouveau procédé de formation de la goulotte de soudure au cours du soufflage de la paraison.

Selon ce procédé, on met en oeuvre les étapes suivantes, dans un moule de soufflage comprenant deux empreintes et un noyau, l'une des empreintes délimitant une cavité pour la formation d'une goulotte de soudure, ladite cavité ayant une embouchure débouchant face au noyau :

- on prévoit un poussoir sur le noyau en regard de l'embouchure de la cavité de l'empreinte, le poussoir étant apte à prendre une première position en retrait de la cavité et une seconde position dans laquelle il occupe une partie de l'embouchure de la cavité,
- on positionne le poussoir dans sa première position,
- on souffle la paraison pour la conformer à la forme des empreintes,
- pendant le fluage de la paraison vers l'intérieur de la cavité, on avance le poussoir dans sa seconde position.

Grâce à l'invention, la présence du poussoir dans l'embouchure de la cavité limite la migration de la couche barrière de la paraison vers la zone de soudure de la goulotte de soudure.

Dans un mode de mise en œuvre préféré, on prévoit aussi un pavé mobile sur l'empreinte pour délimiter la cavité en regard du poussoir, le pavé mobile étant apte à prendre une première position et une seconde position, le volume de la cavité étant plus petit dans la seconde position que dans la première, et, pendant le fluage de la paraison vers l'intérieur de la cavité, on place le pavé mobile dans sa seconde position.

De façon pratique, il est plus simple que le mouvement du pavé mobile soit tel que le volume de la cavité soit maximal lorsque le pavé mobile est dans sa première position et minimal lorsque le pavé mobile est dans sa seconde position.

Le fait que le pavé mobile repousse la matière ayant flué dans la cavité accentue encore le maintien de la couche barrière à distance de la zone de soudure.

Dans un mode de mise en œuvre particulier de l'invention, le mouvement du pavé mobile est concomitant à celui du poussoir.

Alternativement, le mouvement du pavé mobile est déclenché postérieurement à celui du poussoir.

Dans un mode de réalisation particulier de l'invention, le poussoir comporte une tête et un épaulement.

De préférence, on dimensionne le poussoir de manière à laisser subsister, dans la seconde position et dans la direction transversale au mouvement du poussoir, un jeu entre la tête du poussoir et la paraison. On obtient un tel jeu en respectant par exemple la formule suivante, où A est la distance mesurée dans la direction du mouvement du poussoir, entre la tête du poussoir et l'empreinte, B est la distance mesurée dans la direction transversale au mouvement du poussoir, entre la tête du poussoir et l'empreinte, et C est la distance mesurée dans la direction du mouvement du poussoir, entre l'épaulement du poussoir et l'empreinte :

$$A = 4 \,/\, B \text{ et } C \geq 6 \text{ mm}$$

La distance C correspond, par construction, à l'épaisseur de la paraison au niveau de l'épaulement du poussoir.

Selon l'invention, on entend par matière plastique, une matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition convient. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé est le polyéthylène. D'excellents résultats ont été obtenus avec du polyéthylène haute densité (PEHD). De préférence, le réservoir comprend également une couche d'une résine imperméable au carburant telle que l'EVOH par exemple (copolymère éthylène - acétate de vinyle partiellement hydrolysé). Alternativement ou cumulativement, il peut être soumis à un traitement de surface (fluoration ou sulfonation) ayant pour but de le rendre imperméable au carburant.

L'invention a également pour objet un réservoir en matière plastique issu d'un moulage par soufflage d'une paraison, comportant une goulotte de soudure, c'est-à-dire une forme en saillie de sa face externe qui présente un bord apte à être soudé à un bord correspondant d'une pièce rapportée, ladite goulotte de soudure se terminant axialement, du côté intérieur au réservoir, par une forme résultant d'un moulage par contact entre la paraison et un élément moulant.

Selon certaines caractéristiques avantageuses mais optionnelles de l'invention, qui peuvent être prises seules ou en combinaison :

- La goulotte de soudure se termine axialement, du côté intérieur au réservoir, par un rebord interne ayant la forme d'un anneau.
- La goulotte de soudure se termine axialement, du côté extérieur au réservoir, par une forme résultant d'un moulage par contact entre la paraison et un élément moulant.
- La goulotte de soudure se termine axialement, du côté extérieur au réservoir, par une surface plane radiale en forme d'anneau.

- La goulotte de soudure comporte, en retrait de la surface plane radiale, un rebord interne en forme d'anneau.
- La goulotte de soudure présente une forme non de révolution, de manière à présenter une meilleure résistance mécanique.

L'invention sera mieux comprise à la lecture des figures annexées, qui sont fournies à titre d'exemples et ne présentent aucun caractère limitatif, dans lesquelles :

La figure 1 est une vue en élévation d'un réservoir à carburant muni d'une tubulure de remplissage.
La figure 2 est une vue en coupe d'une partie II du réservoir de la figure 1, montrant une goulotte de soudure selon un premier mode de réalisation.
La figure 3 est une vue en perspective de la même partie II, vue de dessus.
La figure 4 est une vue en perspective et en coupe selon la plan III-III de la figure 3.
La figure 5 est une vue analogue à celle de la figure 4, prise selon un plan IV-IV perpendiculaire au plan III-III.
La figure 6 est une vue analogue à celle de la figure 2, d'un autre mode de réalisation de l'invention.
La figure 7 est une vue analogue à celle de la figure 6, prise dans un plan de coupe perpendiculaire.

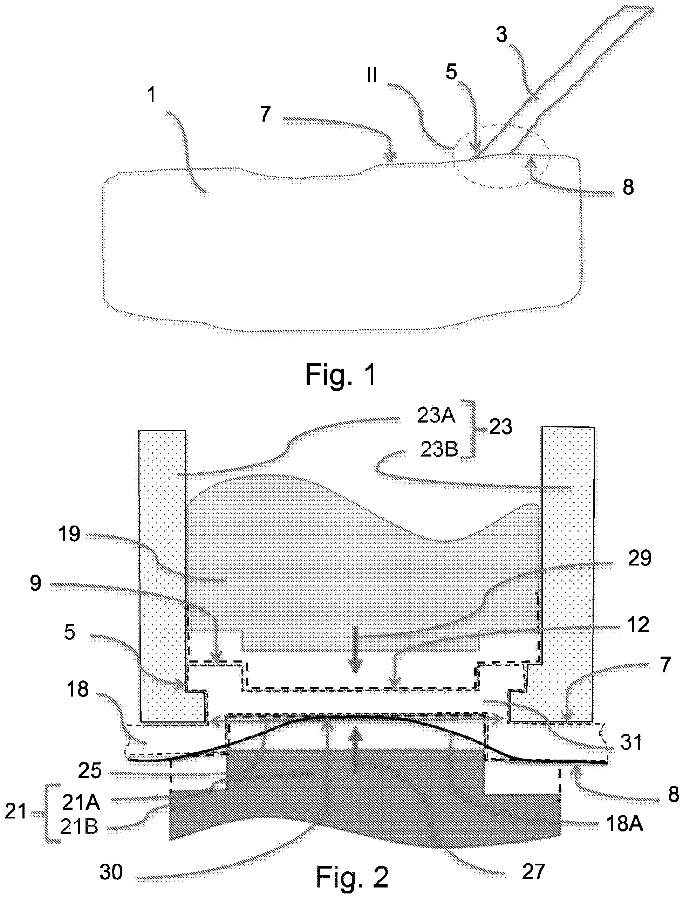

On se réfère maintenant à la figure 1, sur laquelle on peut voir un réservoir 1 de forme générique. Dans la réalité, la forme du réservoir dépend du véhicule mais cette forme n'a pas d'importance dans le contexte de l'invention, qui s'applique à des réservoirs de toutes formes. Ce réservoir a été fabriqué par soufflage d'une paraison, comme cela est connu, à l'intérieur d'un moule de soufflage (non représenté). Un exemple d'une telle fabrication est décrit par exemple dans EP 1110697 A2, dont le contenu est incorporé par référence dans la présente description.

Le réservoir est un réservoir multicouche, en polyéthylène haute densité (PEHD) avec au moins une couche d'EVOH (copolymère éthylène - acétate de vinyle partiellement hydrolysé), qui assure l'étanchéité aux hydrocarbures et est désignée « couche barrière ».

Le réservoir 1 comporte une tubulure de remplissage 3 qui est destinée à relier la trappe à essence (non représentée) du véhicule au réservoir 1. La tubulure 3 est raccordée au réservoir 1 par soudure. Elle est constituée à cet effet d'une matière compatible avec la matière dont est constitué le réservoir, au moins dans les régions en contact de ces deux éléments soudés.

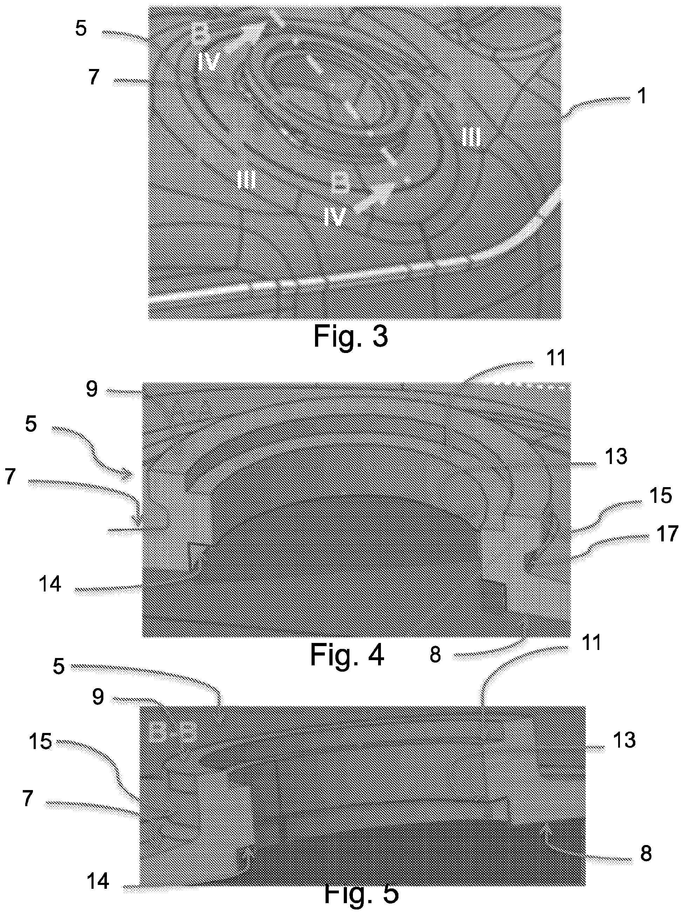

Pour la soudure avec la tubulure 3, le réservoir comporte une goulotte de soudure 5, visible sur les figures 3 à 5.

La goulotte de soudure 5 fait saillie de la face externe 7 du réservoir, ici sous la forme d'une excroissance de révolution globalement évasée, terminée axialement par une surface plane radiale 9 en forme d'anneau.

La surface plane 9 est une surface de soudure, à laquelle l'extrémité de la tubulure de remplissage 3 vient se souder postérieurement à la mise en forme de la paraison par soufflage, afin de solidariser de manière étanche et solide ladite tubulure de remplissage 3 au réservoir 1.

Sur la figure 4, on voit qu'en plus de la surface plane 9, la goulotte de soudure 5 présente, du côté externe au réservoir, un rebord interne 11 qui est, comme la surface plane 9, dirigé vers l'extérieur du réservoir 1. Le rebord interne 11 forme un anneau de plus petits diamètres qui se trouve en retrait de la surface plane 9. Il est plan et parallèle à ladite surface 9. Du fait de la présence du rebord interne 11, la face interne 13 de la goulotte 5 se termine par une forme globalement évasée, avec une section en escalier. Les formes de la surface plane 9 et du rebord interne 11 peuvent être quelconques, dès lors qu'elles permettent l'utilisation de la goulotte de soudure pour raccorder le réservoir à un accessoire externe tel que la tubulure 3, mais selon l'invention, ces formes résultent d'un moulage par contact entre la feuille 18 (ou plus généralement la paraison) et un élément moulant, comme on le verra ultérieurement.

Du côté intérieur au réservoir, la goulotte de soudure se termine axialement par un second rebord interne 14, similaire au premier rebord interne 11, c'est-à-dire formant un anneau de petits diamètres qui se trouve en retrait de la face interne 8 du réservoir. La forme du rebord interne 14 peut être quelconque, mais selon l'invention, elle résulte d'un moulage par contact entre la feuille 18 (ou plus généralement la paraison) et un élément moulant, comme on le verra ultérieurement.

Comme on le voit sur la figure 5, la face latérale externe 15 de la goulotte de soudure 5 est cylindrique, à l'exception de deux échancrures 17 diamétralement opposées, visibles sur les figures 3 et 4.

Ces échancrures 17 servent à arrimer un outil de reprise, pour effectuer des finitions sur le réservoir après son moulage, et notamment le perçage de la goulotte 5, comme cela sera décrit ultérieurement.

En outre, ces échancrures 17 empêchent la goulotte de soudure d'avoir une forme de révolution, c'est-à-dire invariante dans toute rotation autour de son axe, ce qui procure une meilleure résistance mécanique à la goulotte de soudure, d'après les tests réalisés par les inventeurs.

On va maintenant décrire le procédé selon l'invention dans un mode de mise en œuvre particulier et non limitatif.

Comme décrit dans EP 1110697 A2, une paraison constituée de deux feuilles 18 de matière plastique multicouche est extrudée d'une filière d'extrusion et est descendue dans un moule (non représenté).

Ce moule comprend deux moitiés complémentaires, appelées coques ou matrices ou encore empreintes, et un noyau central qui peut être interposé entre les deux coques.

Selon le procédé connu, une fois les deux feuilles de la paraison descendues entre les empreintes, de part et d'autre du noyau, chacune des deux empreintes se referme sur le noyau de manière à fermer une première fois le moule. Une surpression de gaz, en général d'air, est alors établie entre le noyau et chaque feuille de la paraison, de manière à plaquer la feuille contre la paroi intérieure de l'empreinte et à lui en donner la forme. Cette étape est désignée soufflage. Simultanément au soufflage, des accessoires, préalablement installés sur le noyau et portés par des structures mobiles adéquates, sont avancés en direction d'une ou l'autre des feuilles, appliqués contre cette feuille et soudés à celle-ci. Cette opération permet d'insérer dans le réservoir des accessoires divers tels que des clapets de ventilation et des conduites, sans avoir à les introduire dans le moule après son moulage. Après cette mise en forme, les deux empreintes portant chacune une feuille de la paraison s'écartent du noyau et ce dernier est retiré d'entre les deux empreintes. Les deux empreintes sont enfin rapprochées l'une de l'autre de manière à fermer une seconde fois le moule, cette fois en amenant les deux feuilles au contact par leurs périphéries, périphéries qui se soudent l'une à l'autre en formant le réservoir.

L'invention objet de la présente demande se met en œuvre pendant l'exécution de ce procédé connu, lors de son étape de soufflage.

La formation d'une goulotte de soudure peut être requise sur une seule ou sur les deux feuilles 18 de la paraison, selon les fonctionnalités souhaitées sur le réservoir. On ne décrit ici l'invention que pour une seule goulotte de soudure et sur une seule feuille 18, mais cette indication n'est aucunement limitative.

Sur la figure 2, on a représenté deux inserts mobiles 19 et 21, qui seront désignés pavé mobile 19 et poussoir 21, de part et d'autre d'une feuille 18 de la paraison extrudée. Le poussoir 21 est porté par le noyau (non représenté, il est situé en dessous de la feuille 18 par rapport à la figure 2), tandis que le pavé mobile 19 est porté par une des deux empreintes (non représentées, l'empreinte portant le pavé mobile 19 est située au dessus de la feuille 18 par rapport à la figure 2). Autour du pavé mobile 19, la coque comporte en outre un moule de goulotte 23, en deux parties, 23A et 23B capables de se mouvoir dans le plan de la figure, entre une position fermée visible sur la figure 2 et une position ouverte dans laquelle chacune des deux parties 23A et 23B est éloignée de l'autre d'une distance suffisante pour permettre le démoulage de la goulotte après sa mise en forme dans le moule de goulotte 23.

Le moule de goulotte 23, en combinaison avec le pavé mobile 19, délimite une cavité 31 pour la formation d'une goulotte de soudure. Cette cavité 31 a une embouchure 25 débouchant face au noyau.

Le poussoir 21 comporte une tête 21A et un épaulement 21B. Il se trouve en regard de l'embouchure 25 de la cavité 31. Il est apte à prendre une première position en retrait de la cavité 31, visible sur la figure 2, et une seconde position, représentée en trait interrompu sur la figure 2, dans laquelle il occupe une partie de l'embouchure 25 de la cavité 31. Le mouvement du poussoir 21, de la première position à la deuxième position précitées, est matérialisé par la flèche 27.

Le pavé mobile 19 peut lui aussi se déplacer comme indiqué par la flèche 29, entre une position en retrait telle que représenté sur la figure 2 et une position avancée illustrée par un trait interrompu.

Ainsi, le pavé mobile 19 est apte à prendre une première position dans laquelle le volume de la cavité 31 est maximal et une seconde position dans laquelle le volume de la cavité 31 est minimal.

Dans la seconde position, dite avancée, le pavé mobile 19 appuie sur la matière plastique de la paraison et lui donne par moulage sa forme finale délimitée par le trait interrompu, du côté de l'empreinte du moule.

En première position, dite en retrait, le pavé mobile 19 laisse la matière de la paraison s'avancer dans la cavité 31 si elle subit une poussée du côté du noyau du moule, notamment sous l'effet de la surpression lors de l'étape de soufflage de la paraison.

Pour mettre en œuvre l'invention, on exécute les étapes suivantes, lors de l'étape de soufflage d'un procédé de mise en forme du réservoir.

A ce stade, la paraison en deux feuilles 18 est extrudée et chaque feuille 18 est interposée entre le noyau et chacune des deux empreintes du moule. Le moule est fermé sur le noyau.

On positionne le poussoir 19 et le pavé mobile 21 dans leurs premières positions. Le moule de goulotte 23 est fermé, dans la position de la figure 2.

Ensuite, on injecte de l'air sous pression entre chaque feuille 18 et le noyau pour la conformer à la forme de l'empreinte contre laquelle elle est ainsi plaquée. Ce soufflage provoque le fluage de la matière plastique de la feuille 18 vers et à l'intérieur de la cavité 31. La feuille 18 forme alors un creux 18A du côté du noyau.

Pendant le fluage de la matière de la feuille 18 vers l'intérieur de la cavité 31, on avance le poussoir 21 dans sa seconde position représentée en trait interrompu. La tête 21A du poussoir pénètre dans la cavité 31 et l'épaulement 21B s'applique contre la feuille 18. La feuille 18 prend alors la forme correspondante du côté du noyau, comme indiqué par le trait interrompu. En particulier, le poussoir 21 joue le rôle d'élément moulant à l'égard de la feuille et forme un plan 30 qui correspond au futur rebord interne 14.

Dans un second temps, déterminé en fonction des conditions opératoires du soufflage, qui sont définies notamment par l'épaisseur de la paraison, la durée et la pression du soufflage, les températures des éléments en présence, on place le pavé mobile 19 dans sa seconde position représentée en trait interrompu.

La feuille 18 adopte ainsi la forme correspondante, avec la surface plane radiale 9 en forme d'anneau et un plan interne 12, correspondant au futur rebord interne 11, précédemment décrits en référence à la figure 4. En d'autres termes, le pavé mobile 19 joue le rôle d'élément moulant à l'égard de la feuille 18.

Une fois que le poussoir 21 et le pavé mobile 19 ont tous deux atteint leur seconde position, ils demeurent immobiles jusqu'à la fin de l'étape de soufflage. En fonction des différents paramètres du moulage du réservoir, l'invention peut se dérouler sur l'intégralité de l'étape de soufflage (auquel cas elle démarre en même temps que l'injection d'air sous pression et se termine lorsque cesse la pression de soufflage) ou sur une partie seulement de l'étape de soufflage (par exemple elle peut démarrer après l'injection d'air et/ou se terminer avant que cesse la pression de soufflage).

Après un refroidissement de la feuille 18 suffisant pour permettre le démoulage du réservoir, les deux empreintes du moule se séparent, le moule de goulotte 23 s'ouvre et le réservoir est démoulé.

Par une opération de reprise, on réalise alors un perçage de la paroi du réservoir sur toute son épaisseur entre le plan 12 et le plan 30, de manière à découper la face interne 13 de la goulotte et définir les rebords internes 11 et 14. A cet effet, on utilise un outil de perçage qui s'arrime sur les échancrures 17 de la goulotte 5.

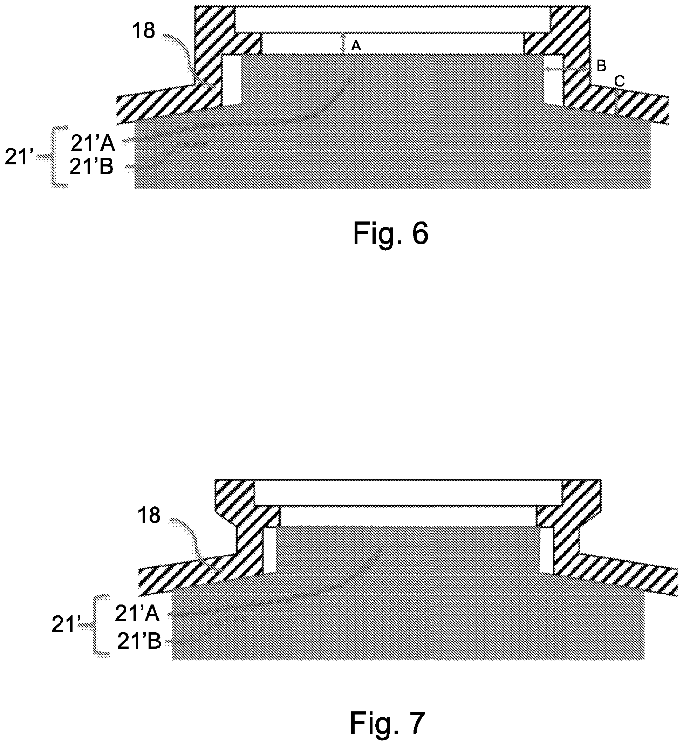

Dans le mode de réalisation des figures 6 et 7, on a utilisé un poussoir 21' dont la tête 21'A est moins large que celle 21A du poussoir 21 précédemment décrit. Le poussoir 21' laisse ainsi un jeu latéral entre la feuille 18 et la tête 21'A qui permet de mieux maitriser le fluage de la matière lors de la formation de la goulotte de soudure.

En considérant la distance A mesurée dans la direction du mouvement du poussoir, entre la tête 21'A du poussoir et l'empreinte, la distance B mesurée dans la direction transversale au mouvement du poussoir, entre la tête 21'A du poussoir et l'empreinte, et la distance C mesurée dans la direction du mouvement du poussoir, entre l'épaulement du poussoir 21'B et l'empreinte, on constate que le rapport A/B est inférieur à 4 et à que la valeur C est inférieure à 6mm.

Des mesures réalisées par les inventeurs sur des réservoirs fabriqués selon l'invention ont montré que la couche barrière de la paraison multicouche se trouve à une distance suffisante de la surface 9 pour qu'une soudure ultérieure de cette surface 9 avec une pièce rapportée, telle qu'une tubulure, n'endommage pas cette couche barrière. Ce positionnement adéquat de la couche barrière dans la paroi du réservoir résulte de l'action du poussoir 19, accentuée par celle du pavé mobile 21, lors de l'étape de soufflage.

En outre, avec une paraison multicouche comprenant de la matière vierge et de la matière rebroyée (par exemple issue de la récupération de rébus), la distribution des couches de la paraison multicouche demeure assez homogène, alors que sans l'action du poussoir 19, on a pu observer que la matière vierge tend à manquer dans la goulotte de soudure, tandis que la matière rebroyée tend à y être présente en excès.

L'invention n'est pas limitée aux modes de réa-

## Revendications

**1.** Procédé de formation d'un goulotte de soudure (5) d'un réservoir en matière plastique (1) à partir d'une paraison multicouche (18), au cours du soufflage de cette paraison pour la fabrication du réservoir, **caractérisé en ce qu'**il consiste à mettre en œuvre les étapes suivantes, dans un moule de soufflage comprenant deux empreintes et un noyau, l'une des empreintes délimitant une cavité (31) pour la formation de la goulotte de soudure (5), ladite cavité (31) ayant une embouchure (25) débouchant face au noyau :

   - on prévoit un poussoir (21) sur le noyau en regard de l'embouchure (25) de la cavité (31) de l'empreinte, apte à prendre une première position en retrait de la cavité (31) et une seconde position dans laquelle il occupe une partie de l'embouchure (25) de la cavité (31),
   - on positionne le poussoir (21) dans sa première position,
   - on souffle la paraison (18) pour la conformer à la forme des empreintes,
   - pendant le fluage de la paraison (18) vers l'intérieur de la cavité (31), on avance le poussoir (21) dans sa seconde position.

**2.** Procédé selon la revendication 1, dans lequel :

   - on prévoit aussi un pavé mobile (19) sur l'empreinte pour délimiter la cavité (31) en regard du poussoir (21), le pavé mobile (19) étant apte à prendre une première position et une seconde position, le volume de la cavité (31) étant plus petit dans la seconde position que dans la première,
   - pendant le fluage de la paraison (18) vers l'intérieur de la cavité (31), on place le pavé mobile (19) dans sa seconde position.

**3.** Procédé selon l'une quelconque des revendications 1 à 2, dans lequel le mouvement du pavé mobile (19) est concomitant à celui du poussoir (21).

**4.** Procédé selon l'une quelconque des revendications 1 à 3, dans lequel le mouvement du pavé mobile (19) est déclenché postérieurement à celui du poussoir (21).

**5.** Réservoir (1) en matière plastique issu d'un moulage par soufflage d'une paraison (18), comportant une goulotte de soudure (5), c'est-à-dire une forme en saillie de sa face externe (7) qui présente un bord (9) apte à être soudé à un bord correspondant d'une pièce rapportée (3), ladite goulotte de soudure (5) se terminant axialement, du côté intérieur au réservoir (1), par une forme (14) résultant d'un moulage par contact entre la paraison (18) et un élément moulant (21), et **caractérisé par le fait que** ladite goulotte se termine axialement, du côté extérieur au réservoir (1), par une forme (9, 11) résultant d'un moulage par contact entre la paraison (18) et un élément moulant (19).

**6.** Réservoir selon la revendication 5, dans lequel la goulotte de soudure (5) se termine axialement, du côté intérieur au réservoir (1), par un rebord interne (14) ayant la forme d'un anneau.

**7.** Réservoir selon la revendication 5 ou 6, dans lequel la goulotte de soudure (5) se termine axialement, du côté extérieur au réservoir (1), par une surface plane radiale (9) en forme d'anneau.

**8.** Réservoir selon la revendication 7, dans lequel la goulotte de soudure (5) comporte, en retrait de la surface plane radiale (9), un rebord interne (11) en forme d'anneau.

**9.** Réservoir selon l'une quelconque des revendications 5 à 8, dans lequel la goulotte de soudure (5) présente une forme non de révolution, de manière à présenter une meilleure résistance mécanique.

## Patentansprüche

**1.** Verfahren zum Bilden eines Schweißnahtkanals (5) eines Kunststofftanks (1) aus einem mehrschichtigen Vorformling (18) während des Blasens dieses Vorformlings zur Herstellung des Tanks, **gekennzeichnet dadurch** Es besteht darin, die folgenden Schritte in einer Entlastungsform durchzuführen, die zwei Hohlräume und einen Kern umfasst, wobei einer der Hohlräume einen Hohlraum (31) zur Bildung des Schweißnahtkanals (5) begrenzt, wobei der Hohlraum (31)) mit einer Öffnung des Mundes (25) zum Kern hin:

   - Auf dem Kern gegenüber der Öffnung (25) des Hohlraums (31) des Abdrucks ist ein Drücker (21) vorgesehen, der eine erste Position einnehmen kann, die vom Hohlraum (31) zurückgesetzt ist, und eine zweite Position in welches es einen Teil des Mundes (25) der Höhle (31) einnimmt,
   - Der Drücker (21) befindet sich in seiner ersten Position.
   - Der Vorformling (18) wird geblasen, um ihn an die Form der Abdrücke anzupassen.
   - Während des Flusses des Vorformlings (18) zur Innenseite des Hohlraums (31) wird der Drücker (21) in seine zweite Position vorgeschoben.

2. Verfahren nach Anspruch 1, wobei:

   - Auf dem Aufdruck befindet sich auch ein beweglicher Block (19), um den Hohlraum (31) gegenüber dem Drücker (21) abzugrenzen, wobei der bewegliche Block (19) eine erste Position und eine zweite Position einnehmen kann, das Volumen von der Hohlraum (31) ist in der zweiten Position kleiner als in der ersten,
   - Während der Strömung des Vorformlings (18) zur Innenseite des Hohlraums (31) wird der bewegliche Block (19) in seine zweite Position gebracht.

3. Verfahren nach einem der Ansprüche 1 bis 2, bei dem die Bewegung des beweglichen Blocks (19) mit der des Drückers (21) einhergeht.

4. Verfahren nach einem der Ansprüche 1 bis 3, bei dem die Bewegung des beweglichen Blocks (19) nach der des Drückers (21) ausgelöst wird.

5. Tank (1) aus Kunststoff aus einem Blasformteil eines Vorformlings (18), umfassend eines Schweißnahtkanals (5), dh eine aus seiner Außenseite (7) vorstehende Form, die hat eine Kante (9), die an eine entsprechende Kante eines Einsatzes (3) geschweißt werden kann, wobei die Schweißrutsche (5) durch eine resultierende Form (14) axial an der Innenseite des Tanks (1) endet ein Kontaktformteil zwischen dem Vorformling (18) und einem Formelement (21), | und **gekennzeichnet durch** die Tatsache, dass das Schweißnahtkanal (5) axial auf der Seite außerhalb des Tanks (1) endet, durch eine Form (9, 11), die aus einem Kontaktformteil zwischen dem Vorformling (18) und einem Formelement resultiert (19).

6. Tank nach Anspruch 5, bei dem das Schweißnahtkanal (5) axial an der Innenseite des Tank (1) durch einen Innenrand (14) mit der Form eines Rings endet.

7. Tank nach Anspruch 5 oder 6, bei dem das Schweißnahtkanal (5) an der Außenseite des Tanks (1) axial durch eine flache radiale Fläche (9) in Form eines Rings endet.

8. Tank nach Anspruch 7, bei dem das Schweißnahtkanal (5) einen von der radialen ebenen Fläche (9) zurückgesetzten Innenrand (11) in Form eines Rings aufweist.

9. Tank nach einem der Ansprüche 5 bis 8, bei dem das Schweißnahtkanal (5) eine Form aufweist, die nicht drehbar ist, um eine bessere mechanische Beständigkeit zu haben.

## Claims

1. Method for forming a welding spout (5) of a plastic tank (1) from a multilayer parison (18) during the blowing of this parison for the manufacture of the tank, **characterized in that** it consists in carrying out the following steps in a blow mould comprising two mould cavities and a core, one of the mould cavities defining a cavity (31) for forming the welding spout (5), said cavity (31) having a mouth (25) opening out opposite the core:

   - a pusher (21) is provided on the core facing the mouth (25) of the cavity (31) of the impression, being capable of taking a first position set back from the cavity (31) and a second position wherein it occupies part of the mouth (25) of the cavity (31),
   - the pusher (21) is positioned in its first position,
   - the parison (18) is blown out to conform to the shape of the impressions,
   - while the parison (18) creeps into the cavity (31), the pusher (21) is advanced to its second position.

2. A method according to claim 1, wherein:

   - a movable block (19) is also provided on the mould cavity in order to delimit the cavity (31) facing the pusher (21), the movable block (19) being capable of taking a first position and a second position, the volume of the cavity (31) being smaller in the second position than in the first,
   - during the creep of the parison (18) into the cavity (31), the movable block (19) is placed in its second position.

3. A method according to any one of claims 1 to 2, wherein the movement of the movable block (19) is concomitant with that of the pusher (21).

4. A method according to any one of claims 1 to 3, wherein the movement of the movable block (19) is triggered subsequent to that of the pusher (21).

5. A tank (1) made of plastic material produced by blow moulding of a parison (18), comprising a welding spout (5), i.e. a shape projecting from its outer surface (7) which has an edge (9) configured to be welded to a corresponding edge of an insert (3), said welding spout (5) ending axially, on the inner side of the tank (1), by a shape (14) resulting from a contact moulding between the parison (18) and a moulding element (21), and **characterized by** the fact that said welding spout (5) ends axially on the outside of the tank (1), in a shape (9, 11) resulting from a contact moulding between the parison (18) and a moulding element (19).

6.   Tank according to claim 5, wherein the welding spout (5) ends axially on the inside of the tank (1) with a ring-shaped inner shape (14).

7.   Tank according to claim 5 or 6, wherein the weld spout (5) ends axially on the outside of the tank (1) with a ring shaped radial flat surface (9).

8.   Tank according to claim 7, wherein the weld spout (5) comprises, set back from the radial plane surface (9), a ring-shaped inner rim (11).

9.   Tank according to any one of claims 5 to 8, wherein the weld spout (5) having a non-revolving shape, so as to have an improved strength.

**Fig. 1**

**Fig. 2**

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10214900 A1
- US 2011221104 A1
- US 2009308881 A1
- US 6338420 B1
- US 7600652 B1
- EP 1110697 A2